(19) Europäisches Patentamt
European Patent Office
Office européen des brevets

(11) **EP 2 320 536 A1**

(12) **EUROPEAN PATENT APPLICATION**

(43) Date of publication:
**11.05.2011 Bulletin 2011/19**

(51) Int Cl.:
**H02J 7/00** *(2006.01)*

(21) Application number: **10186820.6**

(22) Date of filing: **07.10.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.10.2009 JP 2009240746**

(71) Applicant: **Nisshinbo Holdings, Inc.**
**Tokyo 103-8650 (JP)**

(72) Inventors:
• **Higashi, Yoji**
 **Chiba 267-0056 (JP)**
• **Mitsuya, Kunihiro**
 **Chiba 267-0056 (JP)**
• **Nishizawa, Hiroshi**
 **Tokyo 103-8650 (JP)**

(74) Representative: **Vossius & Partner**
 **Siebertstrasse 4**
 **81675 München (DE)**

(54) **Electric energy storage module control device**

(57)     Provided is an electric energy storage module control device for controlling an electric energy storage module (2) including a plurality of capacitors (20) connected in series, the electric energy storage module control device including a voltage control circuit (10) connected in parallel to each of the plurality of capacitors (20), in which the voltage control circuit (10) includes a constant voltage control part (14) for controlling and preventing a voltage across the constant voltage control part from exceeding a predetermined voltage, and a resistor (12) connected in series to the constant voltage control part (14), and the predetermined voltage is lower than an upper limit applied voltage of each of the plurality of capacitors (20).

FIG.1

**Description**

The present invention relates to an electric energy storage module control device for controlling a voltage of an electric energy storage module including a plurality of capacitors connected in series.

There is known an electric energy storage module in which a plurality of capacitors, such as electric double layer capacitors, are connected in series. When such an electric energy storage module is charged for use as a power supply source, there may be variations in voltages applied to the capacitors because of individual differences among the capacitors, including capacitance differences, or a temperature difference at the time of use. This situation causes a problem that a specific capacitor may have a short life.

As one of the countermeasures against the above-mentioned problem, there has been proposed a voltage limiting circuit for, if the capacitor has been charged to a voltage exceeding its upper limit voltage, discharging the capacitor so as to reduce the voltage thereof to the upper limit voltage. Such a voltage limiting circuit includes, for example, a Zener diode or a shunt regulator, and is connected in parallel to each capacitor (see, for example, FIGS. 5(b) and 5(c) of Japanese Patent No. 3244592, and Japanese Patent Application Laid-open Nos. Hei 06-261452 and 2005-101434). According to this method, each capacitor is prevented from being over-charged, to thereby delay the progress of degradation of the capacitor.

Alternatively, aimed at absorbing the variations in capacitor voltages, a voltage control circuit for providing voltage equalization has been proposed. Specifically, for example, FIG. 5(a) of Japanese Patent No. 3244592 illustrates a voltage control circuit which is formed of resistors having the same resistance and connected in parallel to each capacitor. Owing to a current flowing through those resistors, a voltage of the whole electric energy storage module is equally divided among the capacitors.

Among the above-mentioned conventional technologies, in the method of limiting the voltage of each capacitor so as not to exceed its upper limit voltage, such voltage control is not performed while the voltage of the capacitor is equal to or lower than the upper limit voltage, even if there are variations in voltages of the capacitors. This means that there may be variations in life among the capacitors. Further, if the capacitor has been charged to a voltage exceeding its upper limit voltage, it is necessary to cause a high current to flow through the voltage limiting circuit so as to quickly consume the charged energy. It is therefore necessary to prepare such a large-scale circuit or a heat dissipation mechanism as to withstand heat generation due to the high current.

On the other hand, according to the method in which the resistor is connected in parallel to each capacitor, the capacitor voltages may be controlled to be equalized all the time, regardless of the magnitude of the voltage of the whole electric energy storage module. In such an equalization circuit, however, a current flows continuously via the resistors all the time, leading to wasted power consumption, which causes a problem that the capacitor may suffer large voltage drop while the electric energy storage module is not in use. Conversely, if the resistance of the resistor is increased to suppress such power consumption, the ability to equalize the capacitor voltages lowers.

The present invention has been made in view of the above-mentioned circumstances, and one of the objects thereof is to provide an electric energy storage module control device having low power consumption, which is capable of equalizing capacitor voltages even while the capacitor voltages are equal to or lower than upper limit voltages thereof.

In order to solve the above-mentioned problems, the present invention provides an electric energy storage module control device for controlling an electric energy storage module including a plurality of capacitors connected in series, the electric energy storage module control device including a voltage control circuit connected in parallel to each of the plurality of capacitors, in which: the voltage control circuit includes: a constant voltage control part for controlling and preventing a voltage across the constant voltage control part from exceeding a predetermined voltage; and a resistor connected in series to the constant voltage control part; and the predetermined voltage is lower than an upper limit applied voltage of each of the plurality of capacitors.

Further, in the above-mentioned electric energy storage module control device, the constant voltage control part may include a shunt regulator.

Still further, in the above-mentioned electric energy storage module control device, the shunt regulator may include a cathode terminal, an anode terminal, and a reference voltage terminal, and the reference voltage terminal may be directly connected to the cathode terminal.

Yet further, in the above-mentioned electric energy storage module control device, the predetermined voltage may be between 50% or more and 85% or less with respect to the upper limit applied voltage of each of the plurality of capacitors.

Yet further, in the above-mentioned electric energy storage module control device, the resistor may have a resistance of between 2 Ω or larger and 50 Ω or smaller. Further, the resistor may have a resistance of between 5 Ω or larger and 10 Ω or smaller.

In the accompanying drawings:

FIG. 1 is a diagram illustrating a circuit configuration of an electric energy storage module control device according to a first embodiment of the present invention;

FIG. 2 is a graph illustrating an example of a temporal change in a voltage of each capacitor;

FIG. 3 is a graph illustrating an example of a relationship between a resistance and current consumption and a relationship between the resistance and a voltage difference among the capacitors at the time of convergence;

FIG. 4 is a diagram illustrating a circuit configuration of an electric energy storage module control device according to a second embodiment of the present invention; and

FIG. 5 is a graph illustrating a temporal change in a voltage of each capacitor according to an example of the present invention.

Now, embodiments of the present invention are described below with reference to the accompanying drawings.

[First Embodiment]

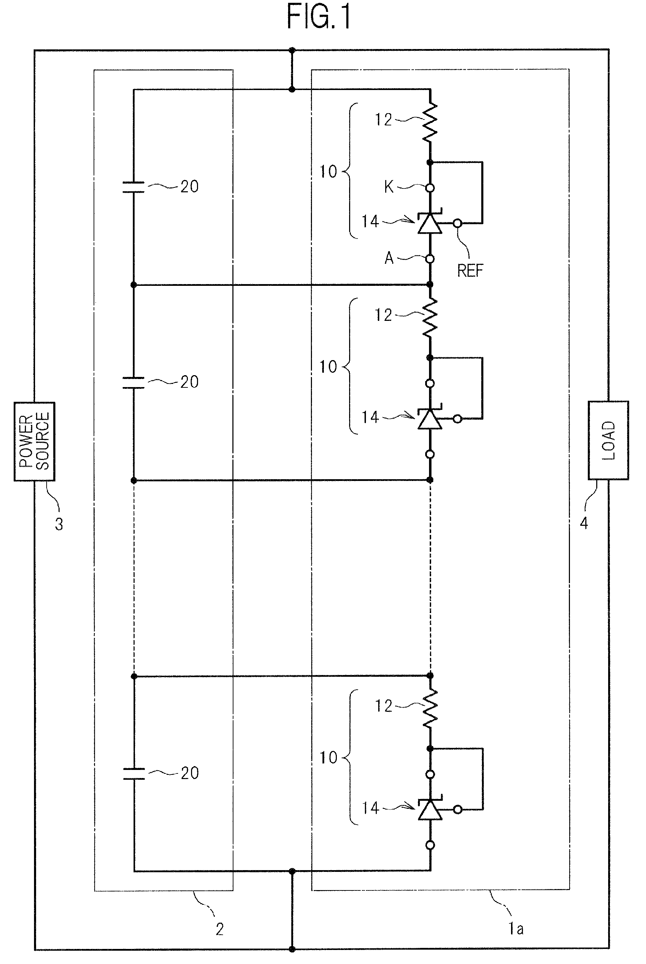

FIG. 1 is a diagram illustrating a circuit configuration of an electric energy storage module control device 1a according to a first embodiment of the present invention. An electric energy storage module 2 to be controlled by the electric energy storage module control device 1a according to this embodiment includes a plurality of capacitors 20 connected in series to one another. It should be noted that in this embodiment, N capacitors 20 are connected in series. Each of the capacitors 20 is an electric energy storage device, such as an electric double layer capacitor, which is capable of storing power when supplied with a current. The N capacitors 20 are of the same type and the same capacitance. To charge the electric energy storage module 2, a voltage is applied across both end terminals thereof from an external power source 3. Power is storaged in the electric energy storage module 2 and utilized for driving a load 4.

As illustrated in FIG. 1, the electric energy storage module control device 1a includes the same number of (N) voltage control circuits 10 as the capacitors 20 forming the electric energy storage module 2. The voltage control circuits 10 are connected in parallel to the capacitors 20 on a one-on-one basis.

Each of the voltage control circuits 10 includes a resistor 12 and a constant voltage control part 14 connected in series to the resistor 12. N resistors 12 have the same resistance (hereinafter, referred to as resistance R).

The constant voltage control part 14 controls a voltage across the constant voltage control part 14 so as not to exceed a predetermined voltage. Hereinafter, the predetermined voltage is referred to as an operating voltage $V_s$ of the constant voltage control part 14. If a voltage of the capacitor 20 (hereinafter, referred to as capacitor voltage $V_c$) becomes the operating voltage $V_s$ or higher, the voltage of the constant voltage control part 14 included in the voltage control circuit 10 connected in parallel to the capacitor 20 is maintained not to exceed the operating voltage $V_s$. Then, a voltage $(V_c\text{-}V_s)$ corresponding to a difference between the capacitor voltage $V_c$ and the operating voltage $V_s$ of the constant voltage control part 14 is applied across the resistor 12 connected in series to the constant voltage control part 14. It should be noted that N constant voltage control parts 14 have the same operating voltage $V_s$.

In this embodiment, the constant voltage control part 14 does not allow a current to flow unless the voltage applied thereacross becomes the operating voltage $V_s$ or higher. Accordingly, while the capacitor voltage $V_c$ is lower than the operating voltage $V_s$, no current flows through the voltage control circuit 10 connected in parallel to the capacitor 20.

The constant voltage control part 14 includes a shunt regulator. As illustrated in FIG. 1, the shunt regulator includes both end terminals (cathode terminal K and anode terminal A) and a reference voltage terminal REF (reference terminal) , as connection terminals to the outside. The shunt regulator has a built-in reference voltage (hereinafter, referred to as internal reference voltage $V_{ref}$), and operates so that the reference voltage terminal REF has a voltage equal to the internal reference voltage $V_{ref}$.

In this embodiment, the cathode terminal K of the shunt regulator is connected to one end of the resistor 12, and the anode terminal A thereof is connected to one end of the capacitor 20. Another end of the resistor 12 is connected to another end of the capacitor 20. Further, in this embodiment, the reference voltage terminal REF of the shunt regulator is directly connected to the cathode terminal K. With this configuration, feedback control is made on the current flowing through the shunt regulator so that the cathode terminal K has a voltage equal to the internal reference voltage $V_{ref}$ of the shunt regulator. In other words, in this embodiment, the operating vol tage $V_s$ of the constant voltage control part 14 is equal to the internal reference voltage $V_{ref}$ of the shunt regulator.

Now, an operation of the electric energy storage module control device 1a will be described.

Using the power source 3, the electric energy storage module 2 is charged until the voltage across the electric energy storage module 2 reaches a voltage $V_m$, which is $N \cdot V_s$ or higher. Then, when the capacitor voltage $V_c$ of the capacitor 20 becomes the operating voltage $V_s$ or higher, a current starts to flow through the shunt regulator included in the corresponding voltage control circuit 10. At this time, the voltage across the constant voltage control part 14 is maintained at the operating voltage $V_s$, which is constant regardless of fluctuations in the capacitor voltage $V_c$. Then, a voltage $(V_m\text{-}N \cdot V_s)$ corresponding to a difference between the voltage $V_m$ of the whole electric energy storage module 2 and the total value $N \cdot V_s$ of the voltages generated across the N constant voltage control parts 14 is divided by the N resistors 12. Here, the resistors 12 have the same resistance R, and hence the voltage $(V_m\text{-}N \cdot V_s)$ is equally divided by the resistors 12. In other words, the resistors 12 have the same voltage $V_r$ generated thereacross. Also, because the constant voltage control parts 14 have the same operating voltage $V_s$, the voltage control circuits 10 have the same voltage generated thereacross. This way, the capacitor voltages $V_c$ of the capacitors 20 are equalized. The capacitor voltage $V_c$ in this case is expressed as follows.

$$V_c = V_s + V_r = V_m / N$$

It should be noted that such equalization control on the capacitor voltages $V_c$ is carried out by the electric energy storage module control device 1a in the case of discharging the electric energy storage module 2 to the load 4, as well as in the case of charging the electric energy storage module 2.

The capacitor voltage $V_c$ is divided by the resistor 12 and the constant voltage control part 14 within the voltage control circuit 10, and hence the voltage $V_r$ generated by the resistor 12 is the voltage $(V_c-V_s)$, which is lower than the capacitor voltage $V_c$. Therefore, according to the electric energy storage module control device 1a of this embodiment, a small current flows through the resistor 12 compared with a case where the same voltage as the capacitor voltage $V_c$ is applied across the resistor 12. In addition, because the voltage $(V_c-V_s)$ generated by the resistor 12 is low compared with the capacitor voltage $V_c$, even if there are variations in resistances R among the resistors 12, an equalization error due to the variations may be suppressed compared with a case of directly equalizing the capacitor voltages $V_c$.

Further, as described above, when the capacitor voltage $V_c$ becomes lower than the operating voltage $V_s$, the current stops flowing through the voltage control circuit 10. Accordingly, even if a current flows through the voltage control circuit 10 to discharge the capacitor 20 when the electric energy storage module 2 is not in use, the discharge via the voltage control circuit 10 may stop at a time when the capacitor voltage $V_c$ reduces to the operating voltage $V_s$. Therefore, further power consumption of the voltage control circuit 10 is prevented, to thereby suppress voltage drop of the capacitor 20 due to the voltage control circuit 10.

Next, preferred values of the operating voltage $V_s$ of the constant voltage control part 14 and the resistance R of the resistor 12 will be described.

The operating Voltage $V_s$ of each constant voltage control part 14 is desired to have a value of 50% or more and 85% or less with respect to an upper limit voltage $V_{max}$ of the capacitor 20. Here, the upper limit voltage $V_{max}$ of the capacitor 20 is a voltage of the capacitor 20 which is determined when the electric energy storage module 2 has been fully charged under a normal usage environment, that is, a maximum allowable applied voltage of the capacitor 20. During the charge of the electric energy storage module 2, power is supplied from the power source 3, with the voltage $V_c$ of each capacitor 20 prevented from exceeding the upper limit voltage $V_{max}$. The upper limit voltage $V_{max}$ may be set to a rated voltage value specified by a manufacturer of the capacitor 20. The rated voltage may be defined by a value which is determined according to JIS D 1401:2009 at an environmental temperature of 60°C to 80°C.

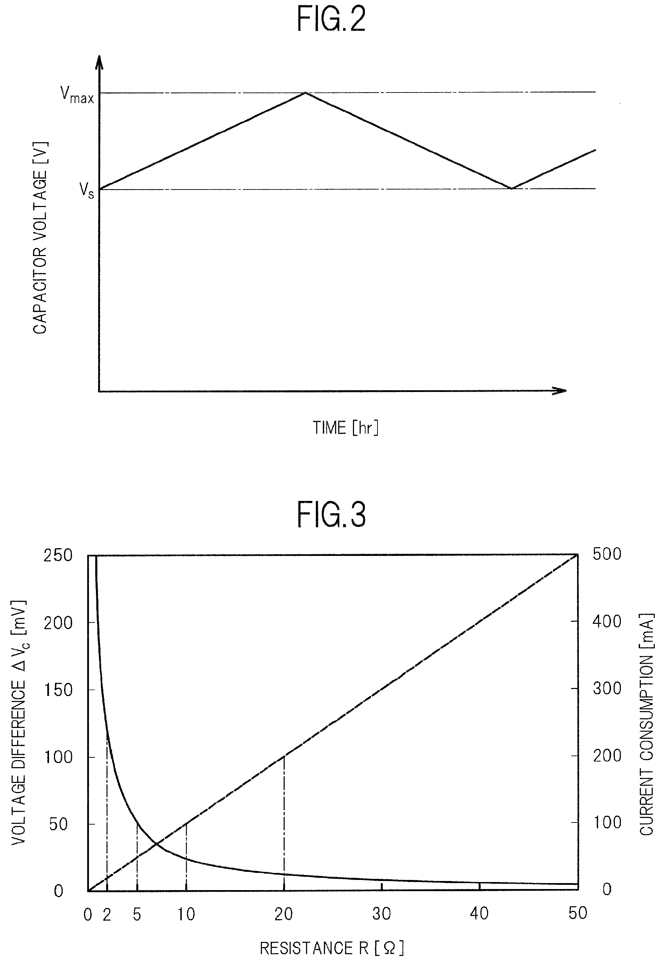

The capacitor voltages $V_c$ of the capacitors 20 are equalized only while each capacitor voltage $V_c$ exceeds the operating voltage $V_s$, and hence the charge/discharge of the electric energy storage module 2 is performed when the capacitor voltage $V_c$ falls within a range between the operating voltage $V_s$ and the upper limit voltage $V_{max}$, inclusively. FIG. 2 is a graph illustrating an example of a temporal change in the capacitor voltage $V_c$, which is caused by such charge/discharge. Here, if the operating voltage $V_s$ is set too low with respect to the upper limit voltage $V_{max}$, the voltage $V_r$ applied across the resistor 12 becomes large when the capacitor 20 is almost fully charged, resulting in an increase in consumption current flowing through the resistor 12. For that reason, the operating voltage $V_s$ is desired to be 50% or more of the upper limit voltage $V_{max}$ of the capacitor 20.

On the other hand, if the operating voltage $V_s$ of the constant voltage control part 14 is set too high, output energy of the capacitor 20 reduces in the case where the capacitor 20 is discharged from the fully-charged state (state in which the capacitor voltage $V_c$ is equal to the upper limit voltage $V_{max}$) until the capacitor voltage $V_c$ becomes equal to the operating voltage $V_s$. For that reason, the operating voltage $V_s$ is desired to be 85% or less of the upper limit voltage $V_{max}$ of the capacitor 20. If the operating voltage $V_s$ falls within the range between 50% or more and 85% or less with respect to the upper limit voltage $V_{max}$, by the time when the capacitor voltage $V_c$ reduces to the operating voltage $V_s$, each capacitor 20 may output energy within a range from about 75% to about 28% with respect to energy of the capacitor 20 storaged by the time of full charge. It should be noted that in a case of a normal battery, considering the influence on the life etc., charge/discharge is performed with energy within a range of about 30% with respect to the storaged energy at the time of full charge.

Further, the resistance R of each resistor 12 is preferably 2 Ω or larger and 50 Ω or smaller, more preferably 2 Ω or larger and 20 Ω or smaller, still more preferably 5 Ω or larger and 10 Ω or smaller.

As the resistance R becomes smaller, the current flowing through the resistor 12 becomes larger, resulting in wasted current consumption. Therefore, from the viewpoint of suppressing the current consumption due to the resistor 12, the resistance R needs to be large to some extent. Specifically, the voltage $V_r$ generated across the resistor 12 when the electric energy storage module 2 is fully charged is equal to a difference $(V_{max}-V_s)$ between the upper limit voltage $V_{max}$ of the capacitor 20 and the operating voltage $V_s$ of the constant voltage control part 14. If the voltage $V_r$ is 0.5 V or higher and 1.5 V or lower and the resistance R is 2 Ω or larger and 50 Ω or smaller, the current flowing through each resistor 12 falls within a range between about 10 mA and 750 mA, which prevents the current consumption from exceeding 750 mA at most. For that reason, the resistance R is preferably 2 Ω or larger, more preferably 5 Ω or larger. It should be noted that in a case where priority is placed on suppressing the current consumption, the resistance R may be 10 Ω or larger.

On the other hand, as the resistance R becomes larger, the equalizing ability of the electric energy storage module control device 1a on the capacitor voltages $V_c$ becomes lowered. Specific description thereof is given below.

Capacitors 20 have variations in amount of leakage current due to variations in electrostatic capacitance and temperature during their use. The variations in leakage current are mainly responsible for the variations in capacitor voltages $V_c$ among the capacitors 20. According to this embodiment, the variations in leakage current are compensated with the current flowing through the resistors 12. Specifically, assuming that a maximum leakage current difference among the capacitors 20 is represented by $\Delta I_L$, the electric energy storage module control device 1a operates so that a voltage difference $\Delta V_c$ in capacitor voltage $V_c$ generated among the capacitors 20 converges within a value expressed as follows.

$$\Delta V_c = \Delta I_L \cdot R$$

As is apparent from the expression, the voltage difference $\Delta V_c$ is proportional to the resistance R. Therefore, as the resistance R becomes smaller, the capacitor voltages $V_c$ may converge to the same value with more accuracy. In other words, as the resistance R becomes smaller, the equalizing ability of the electric energy storage module control device 1a increases more. For that reason, in the case of control on the electric energy storage module 2 including normal capacitors, the resistance R is preferably 50 Ω or smaller, more preferably 20 Ω or smaller. It should be noted that in a case where priority is placed on equalizing the capacitor voltages $V_c$, the resistance R may be 10 Ω or smaller.

For the reasons described above, the resistance R is set to 2 Ω or larger and 50 Ω or smaller, more preferably 2 Ω or larger and 20 Ω or smaller. In those ranges, the resistance R may be set to 2 Ω or larger and 10 Ω or smaller for use with priority given to the equalization of the capacitor voltages $V_c$, while the resistance R may be set to 10 Ω or larger and 20 Ω or smaller for use with priority given to the suppression in current consumption. Further, in a case where the requirements of both the increase in equalizing ability and the suppression in current consumption need to be satisfied in a balanced manner, the resistance R is preferably set to 5 Ω or larger and 10 Ω or smaller.

FIG. 3 is a graph illustrating a relationship between the resistance R and the current consumption, and a relationship between the resistance R and the voltage difference $\Delta V_c$ among the capacitors 20 at the time of convergence. In FIG. 3, the solid line indicates the relationship between the resistance R and the current consumption, and the broken line indicates the relationship between the resistance R and the voltage difference $\Delta V_c$. In the graph, the horizontal axis represents the resistance R (Ω), and the left-hand vertical axis represents the voltage difference $\Delta V_c$ (mV) while the right-hand vertical axis represents the current consumption (mA). It should be noted that in the graph, the leakage current difference $\Delta I_L$ among the capacitors 20 is assumed to be 5 mA. Further, the voltage $V_r$ (=$V_{max}$-$V_s$) generated across the resistor 12 when the electric energy storage module 2 is fully charged is assumed to be 0.5 V.

As illustrated in FIG. 3, as the resistance R becomes smaller, the current consumption becomes larger inversely. On the other hand, in proportion to the resistance R, the voltage difference $\Delta V_c$ increases. Further, centering around the position of an intersection between the solid line and the broken line, in the range of the resistance R between 5 Ω or larger and 10 Ω or smaller, the voltage difference $\Delta V_c$ takes 50 mV or smaller and the current consumption takes 100 mA or smaller, leading to the understanding that the requirements of both the increase in equalizing ability and the suppression in current consumption are satisfied.

According to the electric energy storage module control device 1a of this embodiment described above, within the range in which the capacitor voltage $V_c$ of the capacitor 20 is equal to or higher than the operating voltage $V_s$ of the constant voltage control part 14, the capacitor voltages $V_c$ of the capacitors 20 may be controlled to be substantially equal to one another. Further, compared with the case where only the resistor 12 is connected in parallel to each capacitor 20, the current consumption of the voltage control circuit 10 may be suppressed to be low. Also, as long as the capacitor voltage $V_c$ is equal to or lower than the operating voltage $V_s$, the current consumption of the voltage control circuit 10 may be reduced to 0.

Still further, according to the electric energy storage module control device 1a of this embodiment, the resistor 12 limits the current flowing through the voltage control circuit 10, and hence the breakage of the circuit elements due to overcharge of the capacitor 20 may be prevented.

[Second Embodiment]

Next, an electric energy storage module control device 1b according to a second embodiment of the present invention will be described. It should be noted that the description of the electric energy storage module control device 1b according to this embodiment is mainly directed to a difference from the first embodiment, omitting the same configuration and function as the electric energy storage module control device 1a according to the first embodiment. The same components as the first embodiment are denoted by the same reference symbols.

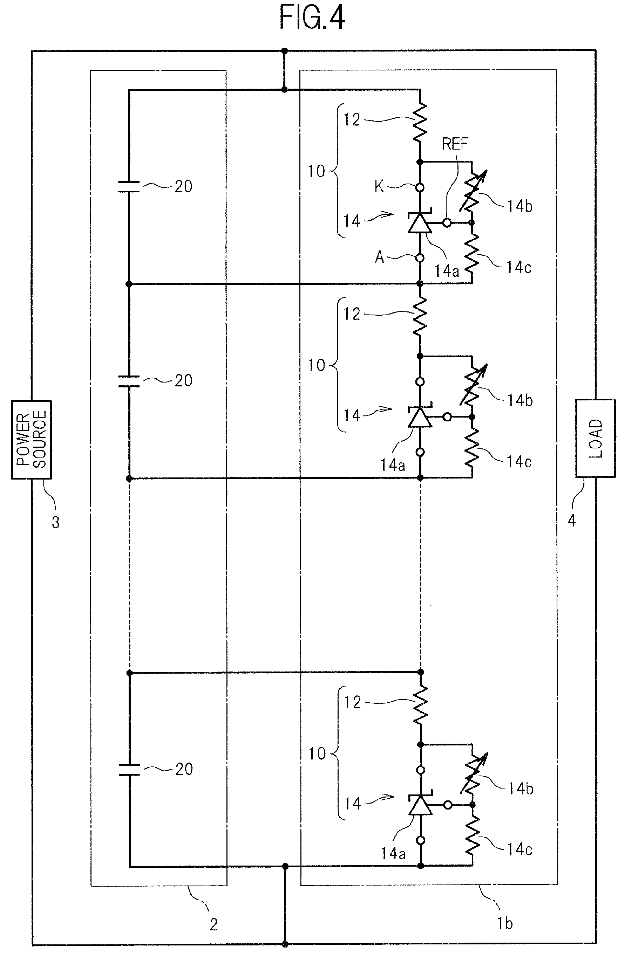

FIG. 4 is a circuit diagram illustrating a circuit configuration of the electric energy storage module control device 1b according to this embodiment. Similarly to the first embodiment, what is to be controlled by the electric energy storage module control device 1b according to this embodiment is the electric energy storage module 2 including the capacitors 20 connected in series to one another. Further, similarly to the first embodiment, the voltage control circuits 10 are connected in parallel to the capacitors 20, respectively, and each include the resistor 12 and the constant voltage control part 14 connected in series to each other.

In this embodiment, unlike the first embodiment, the constant voltage control part 14 includes, in addition to a shunt regulator 14a, two resistors 14b and 14c connected in series to each other. One terminal of the resistor 14b is connected to a cathode terminal Kof the shunt regulator 14a, and another terminal thereof is connected to one terminal of the resistor 14c and a reference voltage terminal REF of the shunt regulator 14a. Another terminal of the resistor 14c is connected to an anode terminal A of the shunt regulator 14a.

In this case, if the amount of current flowing through the reference voltage terminal REF is sufficiently small, the operating voltage $V_s$ of the whole constant voltage control part 14 takes an approximate value expressed by the following expression.

$$V_s = (1 + R1/R2) \cdot V_{ref}$$

where R1 represents a resistance of the resistor 14b, R2 represents a resistance of the resistor 14c, and $V_{ref}$ represents an internal reference voltage of the shunt regulator 14a. From the above expression, according to this embodiment, the constant voltage control part 14 operates with the operating voltage $V_s$, which is determined in accordance with the resistances R1 and R2. In other words, the voltage across the constant voltage control part 14 is controlled so as not to exceed the operating voltage $V_s$. As described above, according to the electric energy storage module control device 1b of this embodiment, the constant voltage control part 14 is allowed to operate with the operating voltage $V_s$ which is different from the internal reference voltage $V_{ref}$ built in the shunt regulator 14a.

At least one of the resistors 14b and 14c employs a variable resistor to adjust its resistance, to thereby appropriately adjust the operating voltage $V_s$ of the constant voltage control part 14 with no modification to the circuit configuration. FIG. 4 illustrates the case where the resistor 14b is a variable resistor.

It should be noted that the embodiments of the present invention are not limited to what has been described above. For example, the constant voltage control part 14 may have a different circuit configuration from those of the first and second embodiments. Further, the capacitor 20 included in the electric energy storage module 2 and connected in parallel to the corresponding voltage control circuit 10 may be a capacitor module in which a plurality of capacitor cells are connected to each other.

[Example]

Now, as an example of the present invention, a specific example of the electric energy storage module control device to which the present invention is applied is described below. The present invention is, however, not limited to the following example.

According to this example, in the circuit configuration illustrated in FIG. 1, as the capacitors 20, five electric double layer capacitors, manufactured by Nisshinbo Holdings Inc., having a capacitance of 250 F and a rated voltage of 3.0 V were connected in series to form the electric energy storage module 2. Further, in the circuit configuration illustrated in FIG. 1, as the resistor 12, "CR1/4-100FV", manufactured by Hokuriku Electric Industry Co., Ltd, having a resistance of 10 $\Omega$ and a rated power of 1/4 W was used, and as the shunt regulator forming the constant voltage control part 14, "HA17431FPAJ-EL-E", manufactured by Renesas Technology Corp., having an internal reference voltage of 2.495 V was used, to thereby form the electric energy storage module control device 1a. It should be noted that in the circuit configuration illustrated in FIG. 1, a ceramic capacitor for stable operation of the shunt regulator may be connected in parallel between the anode terminal and the cathode terminal or the reference voltage terminal of each shunt regulator forming the constant voltage control part 14.

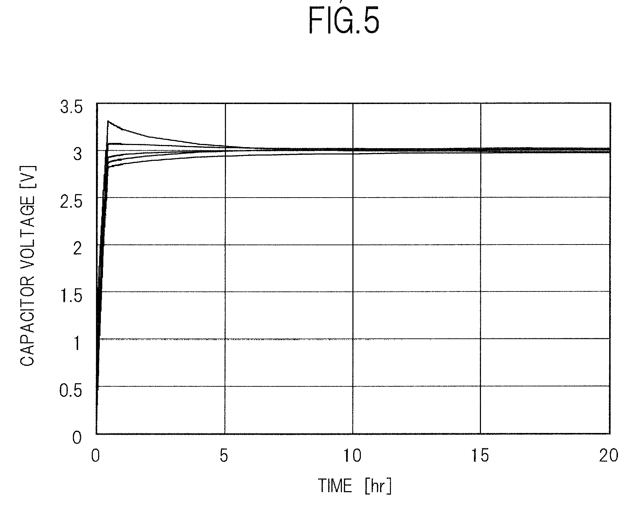

FIG. 5 illustrates temporal changes in voltages of the capacitors 20 obtained when the electric energy storage module control device 1a was used to charge the electric energy storage module 2, starting from the state where the five capacitors 20 are completely discharged. As illustrated in FIG. 5, it was found that, immediately after the start of charge of the capacitors 20, there are variations in capacitor voltages of the capacitors 20, but as time elapses, the voltage of each capacitor 20 converges to about 3 V, with the result that the voltages of the capacitors 20 are equalized.

While there have been described what are at present considered to be certain embodiments of the invention, it will be understood that various modifications may be made thereto, and it is intended that the appended claims cover all such modifications as fall within the true spirit and scope of the invention.

**Claims**

1. An electric energy storage module control device for controlling an electric energy storage module comprising a plurality of capacitors connected in series, the electric energy storage module control device comprising a voltage control circuit connected in parallel to each of the plurality of capacitors, wherein the voltage control circuit comprises:

> a constant voltage control part for controlling and preventing a voltage across the constant voltage control part from exceeding a predetermined voltage; and
> a resistor connected in series to the constant voltage control part, and

wherein the predetermined voltage is lower than an upper limit applied voltage of each of the plurality of capacitors.

2. The electric energy storage module control device according to claim 1, wherein the constant voltage control part comprises a shunt regulator.

3. The electric energy storage module control device according to claim 2, wherein the shunt regulator comprises a cathode terminal, an anode terminal, and a reference voltage terminal, and wherein the reference voltage terminal is directly connected to the cathode terminal.

4. The electric energy storage module control device according to claim 1, wherein the predetermined voltage is 50% or more and 85% or less with respect to the upper limit applied voltage of each of the plurality of capacitors.

5. The electric energy storage module control device according to claim 1, wherein the resistor has a resistance of 2 Ω or larger and 50 Ω or smaller.

6. The electric energy storage module control device according to claim 5, wherein the resistor has a resistance of 5 Ω or larger and 10 Ω or smaller.

# FIG.1

# FIG.2

# FIG.3

# FIG.4

# FIG.5

Europäisches
Patentamt

European
Patent Office

Office européen
des brevets

# EUROPEAN SEARCH REPORT

Application Number

EP 10 18 6820

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 316 917 B1 (OHTA HIROSHI [JP]) 13 November 2001 (2001-11-13) * column 4 - column 9; figures 1,5 * | 1-6 | INV. H02J7/00 |
| A | FAIRCHILD SEMICONDUCTORS: "TL431/TL431A Programmable shunt regulator" [Online] 1 January 2003 (2003-01-01), pages 1-10, XP002619144 DATA SHEET Retrieved from the Internet: URL:http://www.fairchildsemi.com/ds/TL/TL431A.pdf> [retrieved on 2011-02-04] * page 5; figure 1 * | 1-6 | |
| A | US 6 424 156 B1 (OKAMURA MICHIO [JP]) 23 July 2002 (2002-07-23) * column 4 - column 5; figures 2-7 * | 1-6 | |

TECHNICAL FIELDS
SEARCHED        (IPC)

H02J

The present search report has been drawn up for all claims

| Place of search | Date of completion of the search | Examiner |
|---|---|---|
| Munich | 4 February 2011 | Grosse, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 18 6820

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2011

| Patent document cited in search report | | Publication date | Patent family member(s) | | Publication date |
|---|---|---|---|---|---|
| US 6316917 | B1 | 13-11-2001 | DE | 60023772 D1 | 15-12-2005 |
| | | | DE | 60023772 T2 | 03-08-2006 |
| | | | EP | 1035627 A1 | 13-09-2000 |
| US 6424156 | B1 | 23-07-2002 | US | 5977748 A | 02-11-1999 |
| | | | US | 5532572 A | 02-07-1996 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3244592 B
- JP HEI06261452 B
- JP 2005101434 A